# EUROPEAN PATENT SPECIFICATION

(11) **EP 3 886 571 B1**
(45) Date of publication and mention of the grant of the patent: **31.12.2025**
(21) Application number: 19891410.3
(22) Date of filing: 28.11.2019
(51) Int. Cl.: A01G 25/16, G06V 10/10, G06V 10/82, G06V 20/10, G06V 10/764, G06Q 50/02, A01G 9/24

(54) **PLANT CULTIVATION SYSTEM AND METHOD**
PFLANZENZUCHTSYSTEM UND -VERFAHREN
SYSTÈME ET PROCÉDÉ DE CULTURE DE PLANTES

(30) Priority: 29.11.2018 ZA 201808074
(43) Date of publication of application: 06.10.2021
(73) Proprietor: Germishuys, Dennis Mark, 0157 Irene (ZA)
(72) Inventor: Germishuys, Dennis Mark, 0157 Irene (ZA)
(74) Representative: Patentwerk B.V.
(86) International application number: PCT/IB2019/060282
(87) International publication number: WO 2020/110063

(56) References cited:
- WO-A1-2018/042445
- WO-A1-2018/042445
- WO-A1-2018/101848
- US-A1- 2012 101 634
- US-A1- 2014 035 752
- US-A1- 2014 115 958
- US-A1- 2017 006 790
- US-A1- 2018 184 602
- US-A1- 2018 271 029
- US-A1- 2018 330 166
- US-A1- 2018 330 166
- US-A1- 2018 368 345

## Description

### FIELD OF THE INVENTION

The present invention relates to plant cultivation. In particular, the invention relates to a plant cultivation system and a method of cultivating plants.

### BACKGROUND OF THE INVENTION

The inventor identified a need to cultivate plants with a minimum of human intervention. The requirement was also to address plant conditions and disease and pest infestation as soon as possible and to implement corrective actions as soon as such conditions and infestations are detected.

It is an objective of the present invention to address this requirement.

Reference is made to the following prior art documents which present relevant information in the context of the present invention: WO 2018/042445 A1; US 2018/184602 A1; US 2018/330166 A1; US 2018/271029 A1; US 2014/115958 A1.

### SUMMARY OF THE INVENTION

According to a first aspect of the invention, there is provided a plant cultivation system according to appended claim 1.

The image sensors may be selected from any one or more of visible spectrum sensors, multispectral sensors, hyperspectral sensors, thermographic sensors and Chlorophyll fluorescence sensors.

The CNN may be trained with data from the reference library to predict plant growth and yield.

The environmental control arrangement may include dosing pumps, water pumps, humidity controllers and temperature controllers and the like.

The plant cultivation system may be arranged into zones with associated plant sensors and an environmental control arrangement per zone.

Each zone may be defined in terms of global positioning system (GPS) coordinates.

The invention extends to a method of cultivating plants, according to appended claim 5.

The method may include the earlier step of pre-processing digital plant images by means of any one of exposure adjustment, contrast adjustment, gamma correction, rotation, normalization, Sobel filtering and image scaling.

The step of processing the digital plant images may include learning techniques such as logistic regression, linear discriminant analysis, K-nearest neighbours, decision trees, random forests, Gaussian Naive Bayes techniques and support vector machine techniques.

The step of processing the digital plant images may further includes learning techniques selected from any one or more of image moments, Haralick textures and colour histograms.

The matching score may be in the form of an overall health score, which takes in to account all the relevant environmental- and plant factors.

The step of presenting predefined plant conditions and associated treatment regimes based on the plant images includes providing a visual alert schedule.

The step of providing a visual alert schedule may include providing alerts in terms of humidity, light, pH, temperature, mineral imbalance, CO₂ levels, insects on plants and plant disease detected and other custom alerts.

The invention is now described, by way of non-limiting example, with reference to the accompanying figure(s).

### FIGURE(S)

In the figure(s):
Figure 1 shows an overview of a plant cultivation system in accordance with one aspect of the invention is shown;
Figures 2 and 3 show graphical overviews of a method of cultivating plants in accordance with another aspect of the invention;
Figure 4 shows a graphical overview of events being detected in the method of Figures 2 and 3;
Figure 5 shows a graphical overview of the reference databases forming part of the system of Figure 1;
Figure 6 shows a plant treatment method forming part of the method of Figures 2 and 3;
Figure 7 shows remote monitoring of the method of Figures 2 and 3; and
Figure 8 shows an alert display forming part of the system of Figure 1.

In the figures, like reference numerals denote like parts of the invention unless otherwise indicated.

### EMBODIMENT OF THE INVENTION

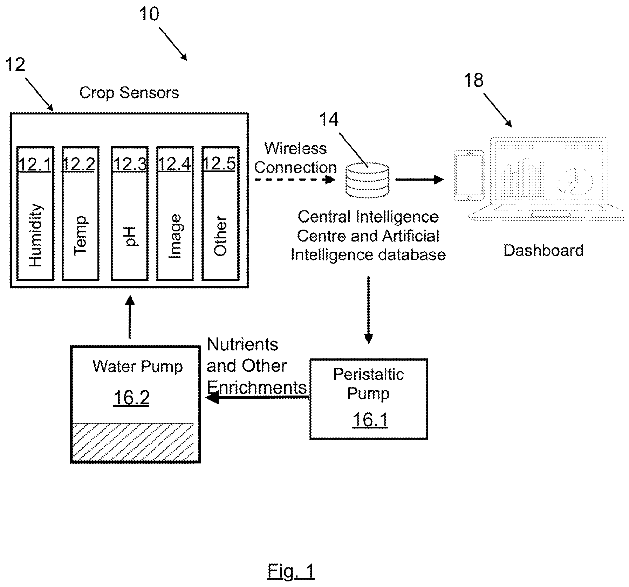

In Figure 1 an overview of a plant cultivation system (10) in accordance with one aspect of the invention is shown. The plant cultivation system (10) includes a set of sensors (12), of which a few examples are shown as humidity sensors (12.1), temperature sensors (12.2), pH sensors (12.3), Image sensors (12.4) and various other sensors (12.5).

All the sensors are able to record data and wirelessly to transfer the data to a processing hardware in the form for a central intelligence centre (14).

The central intelligence centre (14) are controllably connected to an environmental control arrangement in the form of a control system (16), of which only a dosing pump (16.1) are shown. The dosing pump (16.1) is operable to dose feed water of the plants with various types of chemical and biological treatments. The control system (16) further includes an irrigation system (16.2) downstream of the dosing pump (16.1) for distributing treated water to plants being cultivated.

The central intelligence centre (14) is connected to output interfaces in the form of remote monitors (18) which may include mobile devices, such as mobile phones or laptop computers or stationary devices such as desktop computers onto which recorded data can be displayed.

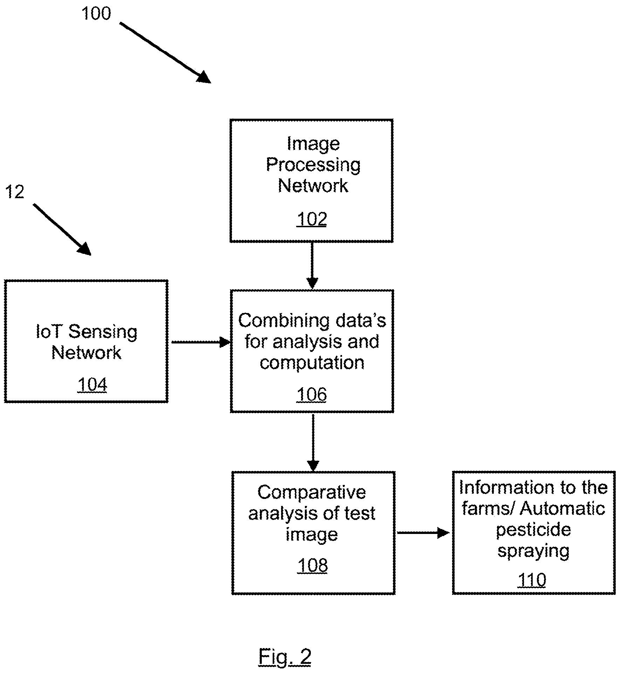

Figure 2 show a graphical overview of a method (100) of cultivating plants. The image sensors (12.4) are connected into an image processing network (30), which receives digital plant images of each plant at (102). The other physical sensors (12) such as the humidity sensors (12.1), temperature sensors (12.2) and pH sensors (12.3) collects environmental data of the plant's environment at (104). The data collected at (102) and (104) are processed by combining the data into a plant condition database at (106). The plant condition database data (106) is then fed into a reference database at (108) to identify and predict predefined plant conditions (also at 108). The outputs of the identified plant conditions are then fed into a treatment regime at (110) for treatment of the plants.

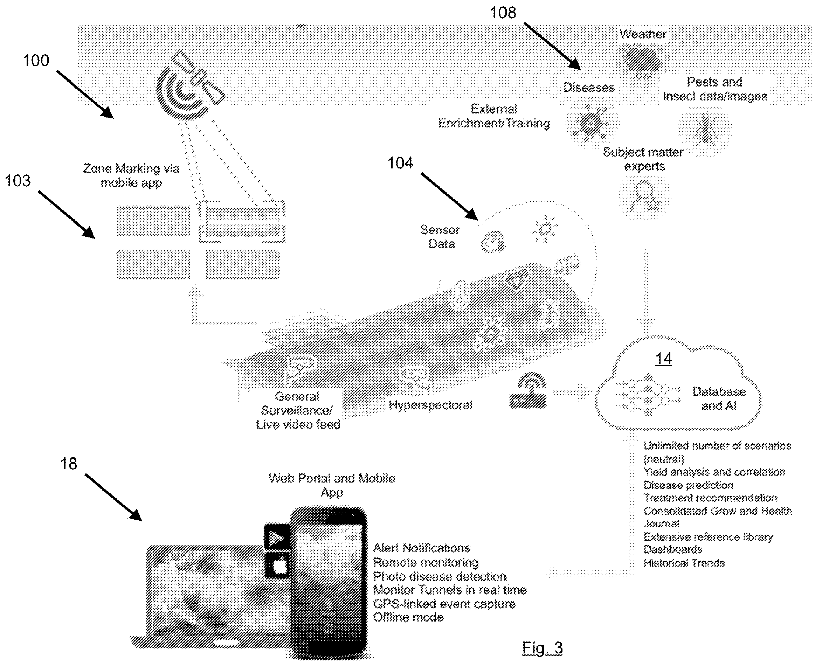

Figure 3 shows another graphical overview of a method (100) of cultivating plants. In particular, a zoning function is shown, where all collected plant data from the sensors (12) is zoned in particular areas of different plant varieties and areas of same plant varieties. The image data (102) and sensor data (104) are shown and the reference data (108) of weather conditions, diseases, subject matter experts and pests are shown. The central intelligence centre (14) is shown and the remote monitors (18) are shown.

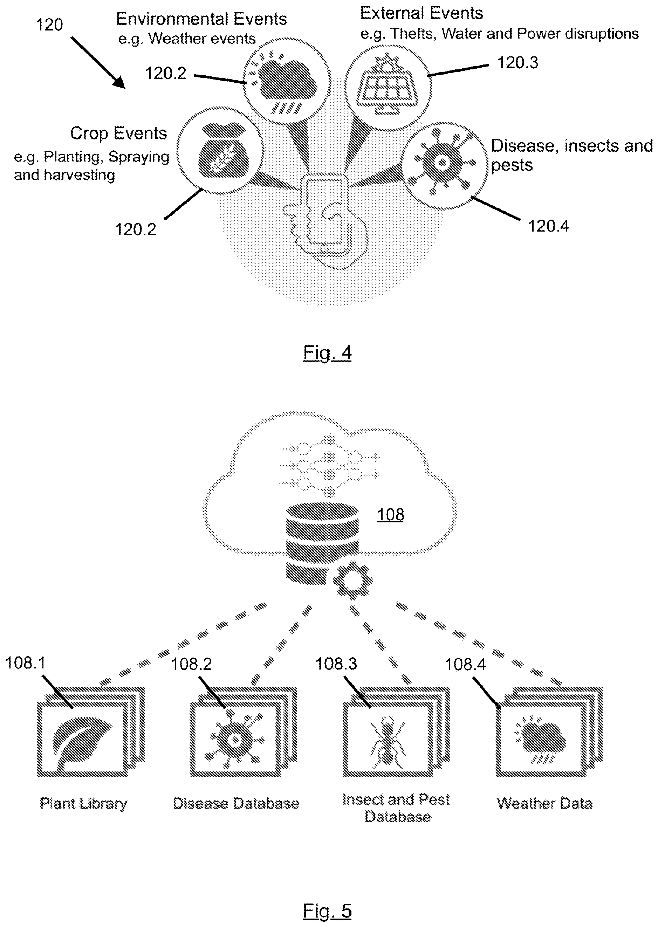

Figure 4 shows classes of events (120) that can be identified by the system, such as crop events (120.1), environmental events (120.2), external events (120.3) and disease and pest events (120.4).

Figure 5 shows the detail of the reference database (108), which includes a reference plant library (108.1), a reference disease library (108.2), a reference pest database (108.3) and a reference weather database (108.4).

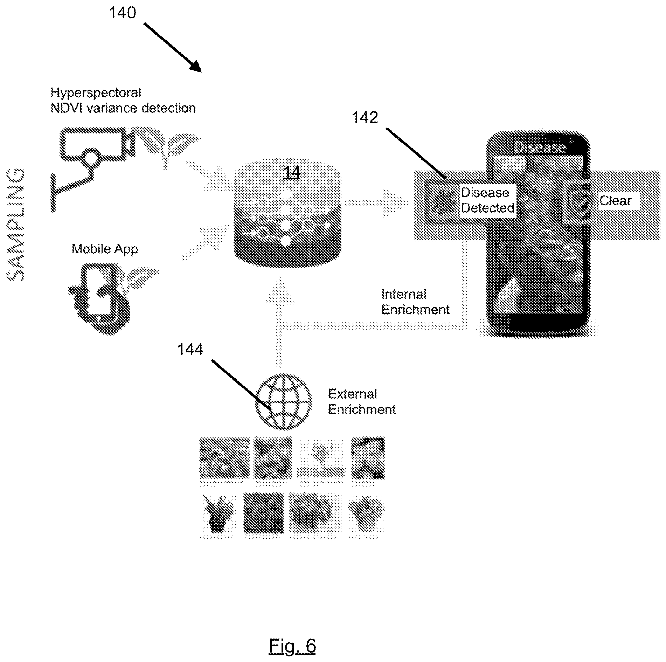

Figure 6 shows a method (140) of applying a treatment regime to the plants, which includes processing data in the central intelligence centre (14) and applying internal treatments (142) and external treatments (144) to the plants. In this context, internal treatments are defined as treatments based on data from the plants being monitored whereas external treatments relate to treatments based on external data sources.

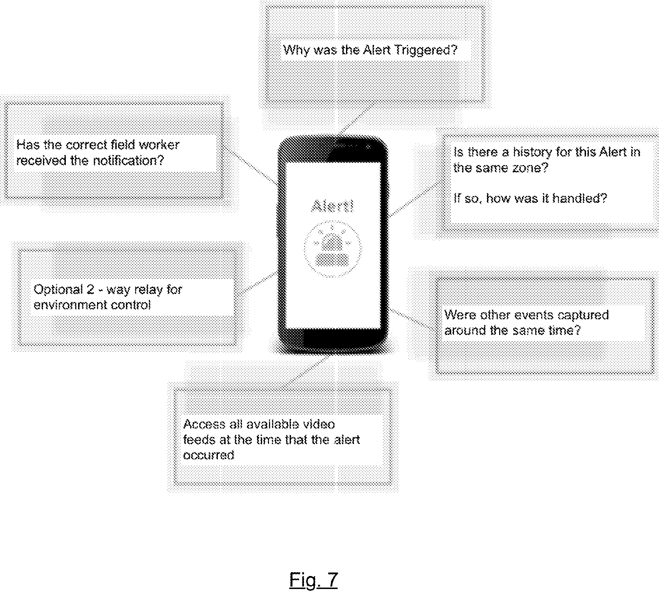

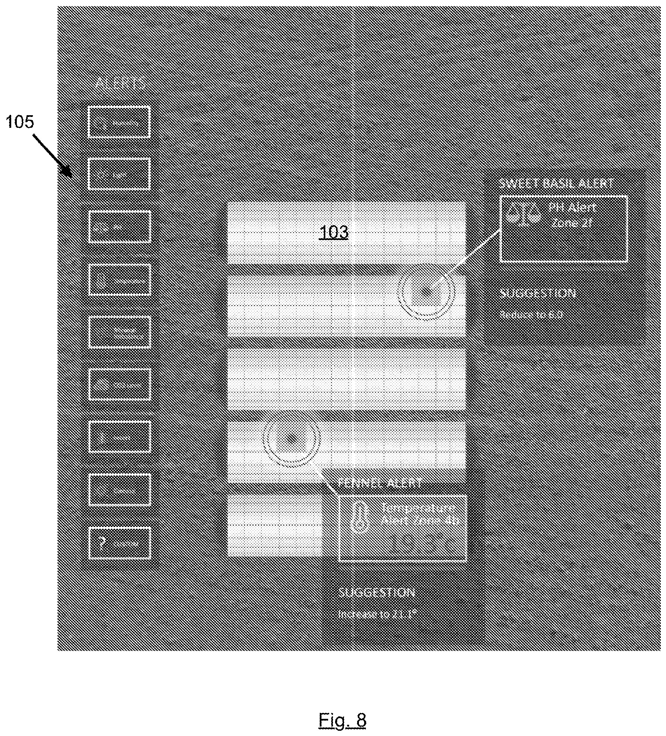

Figures 7 and 8 shows the interaction of the central intelligence centre (14) with the remote monitors (18). In Figure 7, the functionality on a mobile telephone is shown and includes: access to video feeds, environmental controls, notifications to workers, triggering of alerts, history of alerts in the same zone, other events captured during the same time. In Figure 8 the various zones (103) are shown schematically and the type of alerts (105) that can be generated by the central intelligence system (14) are shown. The alerts (105) includes alerts for: humidity, light, pH, temperature, mineral imbalance, CO₂ levels, pests, diseases and other custom alerts that can be programmed. Figure 8 also shows a particular treatment regime which should be followed, for example to reduce the pH in a particular zone or the change in temperature in a particular zone.

The inventor is of the opinion that the invention, as described provides a new method of cultivating plants and a new plant cultivation system, which will be of particular use in cultivating plants by identifying certain conditions and managing them timeously.

## Claims

1. A plant cultivation system (10), which includes:
plant sensors (12) in the form of image sensors (12.4), arranged to capture digital plant images, wherein the plant sensors further include environmental sensors selected from humidity sensors (12.1), temperature sensors (12.2), pH sensors (12.3) and CO₂ sensors (12.5);
processing hardware (14) including a processor, a data storage facility in communication with the processor and input/output interfaces connectable to the plant sensors (12) and in communication with the processor, the processing hardware (14) being configured to implement a convolutional neural network (CNN) trained from a library of plant images (106) to recognize predefined plant conditions from the digital plant images captured by the image sensors and to provide a matching score of a plant image when compared to the predefined plant conditions with which the CNN has been trained; and
wherein the convolutional neural network (CNN) is further trained from internal data originating from the plant sensors (12) and external data from a reference library (108) which includes a plant disease database (108.2), an insect and pest database (108.3) and a weather database (108.4);
wherein the reference library (108) contains treatment regimes (110) associated with predefined plant conditions, the output interface of the processing hardware arranged to present the predefined plant conditions and associated treatment regime to a user;
wherein the plant cultivation system includes a control system (16) and environmental control arrangement, the control system (16) controllably connected to the environmental control arrangement, in use to control a plant cultivation environment.

2. The plant cultivation system (10) of claim 1, in which the image sensors (12.4) are selected from any one or more of visible spectrum sensors, multispectral sensors, hyperspectral sensors, thermographic sensors and Chlorophyll fluorescence sensors.

3. The plant cultivation system (10) of claim 1, in which the environmental control arrangement (16) includes dosing pumps, water pumps, humidity controllers and temperature controllers.

4. The plant cultivation system (10) of claim 3, in which the plant cultivation system is arranged into zones (103) with associated plant sensors and an environmental control arrangement per zone (103),
and in which each zone (103) is defined in terms of global positioning system (GPS) coordinates.

5. A method (100) of cultivating plants by using a plant cultivation system according to claim 1, which method includes:
receiving (102) plant information from plant sensors (12), the plant information including digital plant images from image sensors (12.1); wherein the plant sensors further include environmental sensors selected from humidity sensors (12.1), temperature sensors (12.2), pH sensors (12.3) and CO₂ sensors (12.5);
processing (106) the digital plant images with processing hardware (14), which includes a convolutional neural network (CNN) trained from a library of plant images to recognize predefined plant conditions from the digital plant images and to provide a matching score of a plant image compared to the predefined plant conditions with which the CNN has been trained; wherein the convolutional neural network (CNN) is further trained from internal data originating from the plant sensors (12) and external data from a reference library (108) which includes a plant disease database (108.2), an insect and pest database (108.3) and a weather database (108.4);
accessing a reference library (108) containing treatment regimes associated with predefined plant conditions;
presenting predefined plant conditions and associated treatment regimes based on the digital plant images to a user.

6. The method (100) of cultivating plants of claim 5, in which the step of processing the digital plant images includes learning techniques such as logistic regression, linear discriminant analysis, K-nearest neighbours, decision trees, random forests, Gaussian Naive Bayes techniques and support vector machine techniques.

7. The method (100) of cultivating plants of claim 6, in which the step of processing the digital plant images further includes learning techniques selected from any one or more of image moments, Haralick textures and colour histograms.

## Patentansprüche

1. Pflanzenanbausystem (10), das Folgendes einschließt:
Pflanzensensoren (12) in Form von Bildsensoren (12.4), die angeordnet sind, um digitale Pflanzenbilder aufzunehmen, wobei die Pflanzensensoren ferner Umgebungssensoren einschließen, ausgewählt aus Feuchtigkeitssensoren (12.1), Temperatursensoren (12.2), pH-Sensoren (12.3) und CO₂-Sensoren (12.5);
Verarbeitungshardware (14), die einen Prozessor, eine mit dem Prozessor kommunizierende Datenspeichereinrichtung und mit den Pflanzensensoren (12) verbindbare und mit dem Prozessor kommunizierende Eingabe-/Ausgabe-Schnittstellen einschließt, wobei die Verarbeitungshardware (14) dazu konfiguriert ist, ein anhand einer Bibliothek mit Pflanzenbildern (106) trainiertes Faltungsneuronales Netzwerk (CNN) zu implementieren, um vordefinierte Pflanzenzustände aus den von den Bildsensoren erfassten digitalen Pflanzenbildern zu erkennen und einen Übereinstimmungswert eines Pflanzenbildes im Vergleich zu den vordefinierten Pflanzenzuständen, mit denen das CNN trainiert wurde, bereitzustellen; und
wobei das Faltungsneuronale Netzwerk (CNN) ferner anhand interner Daten, die von den Pflanzensensoren (12) stammen, und externer Daten aus einer Referenzbibliothek (108) trainiert wird, die eine Pflanzenkrankheitsdatenbank (108.2), eine Insekten- und Schädlingsdatenbank (108.3) und eine Wetterdatenbank (108.4) einschließt;
wobei die Referenzbibliothek (108) Behandlungsregime (110) enthält, die vordefinierten Pflanzenzuständen zugeordnet sind, wobei die Ausgabeschnittstelle der Verarbeitungshardware angeordnet ist, um dem Benutzer die vordefinierten Pflanzenzustände und das zugehörige Behandlungsregime zu präsentieren;
wobei das Pflanzenanbausystem ein Steuersystem (16) und eine Umgebungssteuerungsanordnung einschließt, wobei das Steuersystem (16) steuerbar mit der Umgebungssteuerungsanordnung verbunden ist, um im Gebrauch eine Pflanzenanbauumgebung zu steuern.

2. Pflanzenanbausystem (10) nach Anspruch 1, wobei die Bildsensoren (12.4) ausgewählt sind aus einem oder mehreren von sichtbaren Spektrumsensoren, Multispektralsensoren, Hyperspektralsensoren, Thermografiesensoren und Chlorophyllfluoreszenzsensoren.

3. Pflanzenanbausystem (10) nach Anspruch 1, wobei die Umgebungssteuerungsanordnung (16) Dosierpumpen, Wasserpumpen, Feuchtigkeitsregler und Temperaturregler einschließt.

4. Pflanzenanbausystem (10) nach Anspruch 3, wobei das Pflanzenanbausystem in Zonen (103) mit zugeordneten Pflanzensensoren und einer Umgebungssteuerungsanordnung pro Zone (103) angeordnet ist und wobei jede Zone (103) in Form von Koordinaten des globalen Positionierungssystems (GPS) definiert ist.

5. Verfahren (100) zum Anbau von Pflanzen unter Verwendung eines Pflanzenanbausystems nach Anspruch 1, wobei das Verfahren Folgendes einschließt:
Empfangen (102) von Pflanzeninformationen von Pflanzensensoren (12), wobei die Pflanzeninformationen digitale Pflanzenbilder von Bildsensoren (12.1) einschließen; wobei die Pflanzensensoren ferner Umgebungssensoren einschließen, ausgewählt aus Feuchtigkeitssensoren (12.1), Temperatursensoren (12.2), pH-Sensoren (12.3) und CO₂-Sensoren (12.5);
Verarbeiten (106) der digitalen Pflanzenbilder mit Verarbeitungshardware (14), die ein Faltungsneuronales Netzwerk (CNN) einschließt, das anhand einer Bibliothek von Pflanzenbildern trainiert wurde, um vordefinierte Pflanzenzustände aus den digitalen Pflanzenbildern zu erkennen und einen Übereinstimmungswert eines Pflanzenbildes im Vergleich zu den vordefinierten Pflanzenzuständen bereitzustellen, mit denen das CNN trainiert wurde; wobei das Faltungsneuronale Netzwerk (CNN) ferner anhand interner Daten, die von den Pflanzensensoren (12) stammen, und externer Daten aus einer Referenzbibliothek (108) trainiert wird, die eine Pflanzenkrankheitsdatenbank (108.2), eine Insekten- und Schädlingsdatenbank (108.3) und eine Wetterdatenbank (108.4) einschließt;
Zugreifen auf eine Referenzbibliothek (108), die Behandlungsregime enthält, die vordefinierten Pflanzenzuständen zugeordnet sind;
Präsentieren vordefinierter Pflanzenzustände und zugehöriger Behandlungsregime basierend auf den digitalen Pflanzenbildern für einen Benutzer.

6. Verfahren (100) zum Anbau von Pflanzen nach Anspruch 5, wobei der Schritt des Verarbeitens der digitalen Pflanzenbilder Lerntechniken wie logistische Regression, lineare Diskriminanzanalyse, K-nächste Nachbarn, Entscheidungsbäume, Zufallswälder, Gaußsche Naive-Bayes-Techniken und Support-Vektor-Maschinen-Techniken einschließt.

7. Verfahren (100) zum Anbau von Pflanzen nach Anspruch 6, wobei der Schritt des Verarbeitens der digitalen Pflanzenbilder ferner Lerntechniken einschließt, ausgewählt aus einem oder mehreren von Bildmomenten, Haralick-Texturen und Farbhistogrammen.

## Revendications

1. Système de culture de plantes (10), qui comprend :
des capteurs de plantes (12) sous forme de capteurs d'images (12.4), conçus pour capturer des images numériques de plantes, les capteurs de plantes comprenant en outre des capteurs environnementaux choisis parmi les capteurs d'humidité (12.1), les capteurs de température (12.2), les capteurs de pH (12.3) et les capteurs de CO₂ (12.5) ;
un matériel de traitement (14) comprenant un processeur, une installation de stockage de données en communication avec le processeur et des interfaces d'entrée/de sortie connectables aux capteurs de plantes (12) et en communication avec le processeur, le matériel de traitement (14) étant configuré pour mettre en œuvre un réseau de neurones convolutifs (CNN) entraîné à partir d'une bibliothèque d'images de plantes (106) pour reconnaître des conditions de plantes prédéfinies à partir des images de plantes numériques capturées par les capteurs d'images et pour fournir un score de correspondance d'une image de plante lorsqu'elle est comparée aux conditions de plantes prédéfinies avec lesquelles le CNN a été entraîné ; et
le réseau de neurones convolutifs (CNN) est en outre entraîné à partir de données internes provenant des capteurs de plantes (12) et de données externes provenant d'une bibliothèque de référence (108) qui comprend une base de données sur les maladies des plantes (108.2), une base de données sur les insectes et les ravageurs (108.3) et une base de données météorologiques (108.4) ;
la bibliothèque de référence (108) contient des régimes de traitement (110) associés à des conditions de plantes prédéfinies, l'interface de sortie du matériel de traitement étant conçue pour présenter à un utilisateur les conditions de plantes prédéfinies et le régime de traitement associé ;
le système de culture de plantes comprend un système de commande (16) et un dispositif de commande de l'environnement, le système de commande (16) étant relié de manière contrôlable au dispositif de commande de l'environnement, afin de commande l'environnement de culture de plantes.

2. Système de culture de plantes (10) selon la revendication 1, dans lequel les capteurs d'images (12.4) sont choisis parmi l'un quelconque ou plusieurs capteurs à spectre visible, capteurs multispectraux, capteurs hyperspectraux, capteurs thermographiques et capteurs de fluorescence chlorophyllienne.

3. Système de culture de plantes (10) selon la revendication 1, dans lequel le dispositif de commande environnemental (16) comprend des pompes de dosage, des pompes à eau, des régulateurs d'humidité et des régulateurs de température.

4. Système de culture de plantes (10) selon la revendication 3, dans lequel le système de culture de plantes est organisé en zones (103) avec des capteurs de plantes associés et un dispositif de commande de l'environnement par zone (103), et dans lequel chaque zone (103) est définie en termes de coordonnées du système de positionnement global (GPS).

5. Procédé (100) de culture de plantes à l'aide d'un système de culture de plantes selon la revendication 1, lequel procédé consiste à :
recevoir (102) des informations sur les plantes provenant de capteurs de plantes (12), les informations sur les plantes comprenant des images numériques de plantes provenant de capteurs d'images (12.1) ; les capteurs de plantes comprenant en outre des capteurs environnementaux choisis parmi les capteurs d'humidité (12.1), les capteurs de température (12.2), les capteurs de pH (12.3) et les capteurs de CO₂ (12.5) ;
traiter (106) les images numériques de plantes avec le matériel de traitement (14), qui comprend un réseau de neurones convolutifs (CNN) entraîné à partir d'une bibliothèque d'images de plantes pour reconnaître des conditions de plantes prédéfinies à partir des images numériques de plantes et pour fournir un score de correspondance d'une image de plante par rapport aux conditions de plantes prédéfinies avec lesquelles le CNN a été entraîné ; dans lequel le réseau de neurones convolutifs (CNN) est en outre entraîné à partir de données internes provenant des capteurs de plantes (12) et de données externes provenant d'une bibliothèque de référence (108) qui comprend une base de données de maladies des plantes (108.2), une base de données sur les insectes et les ravageurs (108.3) et une base de données météorologiques (108.4) ;
accéder à une bibliothèque de référence (108) contenant des régimes de traitement associés à des conditions de plantes prédéfinies ;
présenter à un utilisateur des conditions de plantes prédéfinies et des régimes de traitement associés, sur la base des images numériques de la plante.

6. Procédé (100) de culture de plantes selon la revendication 5, dans lequel l'étape de traitement des images numériques de plantes comprend des techniques d'apprentissage telles que la régression logistique, l'analyse discriminante linéaire, les K-voisins les plus proches, les arbres de décision, les forêts aléatoires, les techniques gaussiennes de Naive Bayes et les techniques de machine à vecteurs de support.

7. Procédé (100) de culture de plantes selon la revendication 6, dans lequel l'étape de traitement des images numériques de plantes comprend en outre des techniques d'apprentissage choisies parmi l'un quelconque ou plusieurs moments de l'image, les textures Haralick et les histogrammes de couleur.
